# EUROPÄISCHE PATENTSCHRIFT

(11) **EP 3 585 663 B1**
(45) Veröffentlichungstag und Bekanntmachung des Hinweises auf die Patenterteilung: **23.12.2020**
(21) Anmeldenummer: 18706676.6
(22) Anmeldetag: 12.02.2018
(51) Int. Cl.: B60T 13/58, B60T 13/74

(54) **BREMSSYSTEM FÜR EIN FAHRZEUG MIT EINER HYDRAULISCHEN FAHRZEUGBREMSE UND MIT EINER ELEKTROMECHANISCHEN BREMSVORRICHTUNG**
BRAKING SYSTEM FOR A VEHICLE WITH A HYDRAULIC BRAKE AND AN ELECTROMECHANICAL BRAKE ARRANGEMENT
SYSTÈME DE FREINS POUR UN VÉHICULE AVEC UN FREIN HYDRAULIQUE ET UN DISPOSITIF DE FREIN ÉLECTRO-MÉCHANIQUE

(30) Priorität: 22.02.2017 CN 201710096466
(43) Veröffentlichungstag der Anmeldung: 01.01.2020
(73) Patentinhaber: Robert Bosch GmbH, 70442 Stuttgart (DE)
(72) Erfinder: BAEHRLE-MILLER, Frank, 71101 Schoenaich (DE); MANNHERZ, Edith, 74189 Weinsberg (DE); CHEN, Julia, Suzhou 215026 (CN); WEISS, Karl-Josef, 64625 Bensheim (DE); WANG, Zhizhong, Suzhou, 215026 (CN)
(86) Internationale Anmeldenummer: PCT/EP2018/053411
(87) Internationale Veröffentlichungsnummer: WO 2018/153710

(56) Entgegenhaltungen:
- WO-A1-2004/022394
- CN-A- 104 890 657
- DE-A1-102004 004 992
- DE-A1-102015 214 809

## Beschreibung

Die Erfindung bezieht sich auf ein Bremssystem für ein Fahrzeug mit einer hydraulischen Fahrzeugbremse und mit einer elektromechanischen Bremsvorrichtung nach dem Oberbegriff des Anspruches 1.

### Stand der Technik

In der DE 10 2004 004 992 A1 wird ein Bremssystem für ein Fahrzeug beschrieben, das zum einen eine hydraulische Fahrzeugbremse und zum andern eine elektromechanische Feststell-Bremsvorrichtung mit einem elektrischen Bremsmotor umfasst. Der elektrische Bremsmotor der Bremsvorrichtung ist in eine Radbremse der hydraulischen Fahrzeugbremse integriert, wobei der elektrische Bremsmotor einen Bremskolben in Richtung einer Bremsscheibe verstellt und dieser Bremskolben bei einer Betätigung der Fahrzeugbremse auch vom hydraulischen Bremsdruck beaufschlagt wird.

Beim Parken des Fahrzeugs wird die Feststell-Bremsvorrichtung mit dem elektrischen Bremsmotor zur Erzeugung der gewünschten Parkbremskraft betätigt. Falls die Parkbremskraft ein gefordertes Kraftniveau nicht erreicht, wird gemäß der DE 10 2004 004 992 A1 zusätzlich die hydraulische Fahrzeugbremse betätigt, um eine zusätzliche Bremskraft zu erzeugen.

Die DE 10 2015 214 809 A1 offenbart ein Bremssystem für ein Fahrzeug mit einer hydraulischen Fahrzeugbremse mit einem elektrischen Aktuator zur Beeinflussung des Hydraulikdrucks und mit einer elektromechanischen Bremsvorrichtung mit einem elektrischen Bremsmotor. Bei einem aus der gleichen Druckschrift bekannten Verfahren zum Überprüfen der Parkbremskraft wird der Stellweg eines Bremskraftverstärkers der hydraulischen Fahrzeugbremse mit einem Referenzweg verglichen und im Falle einer unzulässig hohen Abweichung ein Fehlersignal erzeugt.

Aus der WO 2004/022394 A1 ist eine Feststellbremsvorrichtung und ein Verfahren zur Betätigung einer elektromechanischen Feststellbremsvorrichtung bekannt, bei der der Aktuator der Feststellbremsvorrichtung aus einem Elektromotor sowie einem dem Elektromotor nachgeschalteten Untersetzungsgetriebe zur Umwandlung einer Drehbewegung in eine translatorische Bewegung besteht. Die elektromechanische Feststellbremsvorrichtung ist als ein Verriegelungsmechanismus ausgebildet, der die Drehbewegung des Aktuators in Löserichtung verhindern kann und der durch weiteres Zuspannen wieder gelöst werden kann. Um sicherzustellen, dass die elektromechanische Feststellbremsvorrichtung ohne die Verwendung eines Spannkraftsensors in sämtlichen Betriebszuständen zuverlässig arbeitet, wird während der Aktivierung der Feststellbremsvorrichtung ein Mittelwert des Drehmoments des Elektromotors, das zum Aufbringen der dem Feststellbremsvorgang entsprechenden Zuspannkraft der Bremse erforderlich ist, bei gleichzeitiger Erfassung der Aktuatorposition ermittelt und gespeichert und der Elektromotor zu späteren Zeitpunkten derart angesteuert, dass er das Drehmoment aufbringt, so dass die aufgebrachte Spannkraft aufrecht erhalten bzw. erhöht wird.

Die CN 104 890 657 A offenbart eine elektromechanische Feststellbremse mit einem Verriegelungsmechanismus für eine mechanische Übertragungseinrichtung eines elektrischen Aktuators der Feststellbremse.

### Offenbarung der Erfindung

Das erfindungsgemäße Bremssystem für Fahrzeuge umfasst eine hydraulische Fahrzeugbremse sowie eine elektromechanische Bremsvorrichtung, die mindestens einen elektrischen Bremsmotor aufweist, insbesondere zwei elektrische Bremsmotoren umfasst. Die hydraulische Fahrzeugbremse wird im regulären Fahrbetrieb betätigt, um eine gewünschte Bremskraft zum Abbremsen des Fahrzeugs zu erzielen. Der Hydraulikdruck, der in der hydraulischen Fahrzeugbremse erzeugt wird, wirkt auf einen Bremskolben in einer Radbremseinheit. Die elektromechanische Bremsvorrichtung mit mindestens einem elektrischen Bremsmotor wird vorzugsweise beim Parken des Fahrzeugs betätigt, um eine das Fahrzeug dauerhaft festsetzende Parkbremskraft auf elektromechanischem Wege zu erzeugen. In einer vorteilhaften Ausführung wirkt der elektrische Bremsmotor der elektromechanischen Bremsvorrichtung auf den gleichen Bremskolben wie die hydraulische Fahrzeugbremse.

Die hydraulische Fahrzeugbremse weist einen elektrischen Aktuator auf, mit dem der Hydraulikdruck beeinflusst werden kann. Der Aktuator ist elektrisch ansteuerbar, so dass über eine elektrische Ansteuerung des Aktuators der Hydraulikdruck in der Fahrzeugbremse erhöht werden kann. Der elektrische Aktuator ist beispielsweise Teil eines Bremskraftverstärkers, mit dem der Fahrer über eine Betätigung des Bremspedals den Hydraulikdruck in der Fahrzeugbremse beeinflusst. Der Bremskraftverstärker verstärkt mithilfe des elektrischen Aktuators den vom Fahrer erzeugten Hydraulikdruck.

Das erfindungsgemäße Bremssystem umfasst des Weiteren einen Verriegelungsmechanismus, der dem elektrischen Aktuator der hydraulischen Fahrzeugbremse oder einer vom Aktuator betätigbaren Übertragungseinrichtung zugeordnet ist. Mithilfe des Verriegelungsmechanismus kann in der Parkposition des Fahrzeugs der Hydraulikdruck durch Blockieren des Aktuators konserviert werden. Der Verriegelungsmechanismus hat hierbei den Vorteil, dass nach dem Verriegeln keine Energiezufuhr für das dauerhafte Beibehalten des Hydraulikdrucks erforderlich ist, da die Verriegelung des Aktuators oder der Übertragungseinrichtung, die dem Aktuator nachgeschaltet ist, auf mechanischem Wege erfolgt. Somit ist während des Parkens des Fahrzeugs dauerhaft eine ausreichend hohe Parkbremskraft gewährleistet, unabhängig von der Funktionstüchtigkeit der elektrischen Komponenten oder des Steuergeräts der elektromechanischen Bremsvorrichtung. Der Verriegelungsmechanismus schafft somit eine mechanische Verknüpfung zwischen der hydraulischen Fahrzeugbremse und der elektromechanischen Bremsvorrichtung und ermöglicht insbesondere bei einer Fehlfunktion einer Komponente der elektromechanischen Bremsvorrichtung bzw. eines zugeordneten Steuergerätes das dauerhafte Erzeugen einer Parkbremskraft. Der elektrische Aktuator ist insbesondere auch autonom und somit ohne Fahrerbetätigung ansteuerbar.

Gemäß einer vorteilhaften Ausführung umfasst der elektrische Aktuator der hydraulischen Fahrzeugbremse einen Elektromotor, der ein die Übertragungseinrichtung bildendes Getriebe antreibt, wobei über den Verriegelungsmechanismus entweder der Elektromotor oder das Getriebe verriegelbar ist. Vorteilhafterweise sind der Elektromotor und das Getriebe Bestandteil des vom Bremspedal zu beaufschlagenden Bremskraftverstärkers (iBooster). Der elektrische Aktuator ist unabhängig von der Betätigung des Bremskraftverstärkers über das Bremspedal ansteuerbar, so dass auch ohne Fahreraktivität der elektrische Aktuator angesteuert werden kann, um einen erhöhten Hydraulikdruck zu erzeugen, der anschließend über die Betätigung des Verriegelungsmechanismus und das Blockieren des Aktuators eingefroren wird.

Gemäß einer weiteren zweckmäßigen Ausführung umfasst der Verriegelungsmechanismus eine elektromagnetische Stelleinrichtung mit einer Sperrklinke, die zwischen einer Freigabeposition und einer Sperrposition verstellbar ist. Die Aktivierung der Stelleinrichtung erfolgt durch Bestromung, woraufhin eine elektromagnetische Kraft erzeugt wird, die die Sperrklinke verstellt. Vorteilhafterweise erfolgt bei der Bestromung der Stelleinrichtung die Überführung der Sperrklinke von der Freigabe- in die Sperrposition, in der der elektrische Aktuator verriegelt ist. Außerdem kann es vorteilhaft sein, auch die Verstellung in Gegenrichtung, also von der Sperrposition in die Freigabeposition, durch eine entsprechend umgekehrte Bestromung der Stelleinrichtung zu bewirken.

In der elektromagnetischen Stelleinrichtung kann ein Permanentmagnet angeordnet sein, der die Sperrklinke in Richtung der Sperrposition beaufschlagt. Diese Ausführung hat den Vorteil, dass lediglich für die Überführungsbewegung der Sperrklinke von der Freigabe- in die Sperrposition eine Bestromung der elektromagnetischen Stelleinrichtung erforderlich ist. Nachdem die Sperrklinke die Sperrposition erreicht hat, wird die Sperrklinke von dem Permanentmagnet in der Sperrposition gehalten, und der Strom kann in der elektromagnetischen Stelleinrichtung abgeschaltet werden, ohne dass dies zu einem Rückstellen der Sperrklinke in die Freigabeposition führt. Hierdurch ist gewährleistet, dass auch ohne dauerhafte Bestromung die Sperrklinke des Verriegelungsmechanismus in der Sperrposition verbleibt.

Gemäß noch einer weiteren zweckmäßigen Ausführung blockiert die Sperrklinke des Verriegelungsmechanismus in der Sperrposition ein Getriebezahnrad des Getriebes, das dem Elektromotor nachgeschaltet ist und sich insbesondere im Übertragungsweg zwischen dem Elektromotor und dem Bremskraftverstärker befindet. In der Sperrposition ragt die Sperrklinke in das Zahnprofil des Getriebezahnrads hinein, so dass eine Rotationsbewegung des Getriebezahnrads in Richtung eines reduzierten Hydraulikdrucks blockiert ist. Das Getriebezahnrad kann drehfest mit der Motorwelle des Elektromotors verbunden sein.

Der Bremskraftverstärker umfasst vorteilhafterweise einen Hauptzylinder, insbesondere in der Ausführung als Tandemzylinder, über den ein oder zwei Bremskreise der hydraulischen Fahrzeugbremse mit Hydraulikdruck versorgt werden. Der Hauptbremszylinder wird von dem Bremspedal verstellt, wobei eine Stellstange, auf die das Bremspedal wirkt, den Hauptbremszylinder verstellt. Zusätzlich kann der Hauptbremszylinder über eine axiale Stellbewegung einer Spindel verstellbar sein, die in einer axial fixierten, jedoch drehbaren Spindelmutter gelagert ist, welche über das Getriebe von dem Elektromotor angetrieben wird. Somit wird die Rotationsbewegung des Elektromotors über das Getriebe und die Spindelmutter in eine axiale Stellbewegung der Spindel übertragen, die als Verstärkungsbewegung auf den Hauptbremszylinder wirkt.

Indem die Sperrklinke den Elektromotor oder das Getriebe blockiert, wird die aktuelle axiale Position der Spindel arretiert und der in dieser Position herrschende Hydraulikdruck eingefroren.

Alternativ zu einem Blockieren eines Getriebezahnrades über die Sperrklinke ist es auch möglich, dass auf der Motorwelle des Elektromotors ein Zahnrad drehfest aufsitzt, das nicht Teil des Getriebes ist und in dessen Verzahnung die Sperrklinke verriegelnd eingreift. Diese Ausführung hat den Vorteil, dass das Getriebe bzw. die Verbindung zwischen dem Elektromotor und dem Getriebe unabhängig und unbeeinflusst von dem Verriegelungsmechanismus ist. Es muss lediglich ein zusätzliches Zahnrad auf der Motorwelle angeordnet werden, das der Sperrklinke des Verriegelungsmechanismus zugeordnet ist.

Gemäß noch einer weiteren zweckmäßigen Ausführung weist das Zahnrad, das auf der Motorwelle drehfest aufsitzt, ein Sägezahnprofil auf, das in der Weise ausgebildet ist, dass ein Weiterdrehen des Zahnrads nur in Richtung eines höheren Hydraulikdrucks möglich ist, in Gegenrichtung dagegen blockiert ist. Die Zähne des Zahnrades weisen dem Sägezahnprofil entsprechend in eine Umfangsrichtung geneigte Sägezähne auf, so dass das Zahnrad bei einem Weiterdrehen in diese Umfangsrichtung unter der Sperrklinke hindurchrutscht, wohingegen bei einer Drehrichtungsumkehr die Sperrklinke an den steilen Zahnflanken der Sägezähne anliegt und ein Durchrutschen des Zahnrades unmöglich macht.

Gemäß einer alternativen Ausführung weist das mit der Motorwelle verbundene Zahnrad Zähne auf, die ein symmetrisches Dreiecksprofil aufweisen. Diese Ausführung hat den Vorteil, dass der erreichte höhere Bremsdruck in der Sperrposition der Sperrklinke zwar eingefroren bleibt, jedoch bei einem aktiven Zurückfahren des Elektromotors das Zahnrad unter der Sperrklinke hindurchrutscht, so dass der Hydraulikdruck abgebaut werden kann. Umgekehrt ist auch eine Erhöhung des Bremsdruckes durch eine entsprechende Ansteuerung des Elektromotors möglich, indem das Zahnrad in der entsprechenden Drehrichtung unter der Sperrklinke hindurchrutscht.

Gemäß noch einer weiteren zweckmäßigen Ausführung weist das Bremssystem einen Betätigungsschalter auf, über den der Verriegelungsmechanismus manuell eingeschaltet, gegebenenfalls auch zusätzlich ausgeschaltet werden kann. Der Betätigungsschalter ist insbesondere unabhängig von einem Parkbremsschalter vorhanden, über den der Fahrer die Parkbremsfunktion aktivieren kann.

In einer alternativen Ausführung wird der Verriegelungsmechanismus nicht manuell vom Fahrer, sondern selbsttätig über Stellsignale eines Steuergerätes ausgelöst, insbesondere falls im Steuergerät erkannt wird, dass in einer elektrischen Komponente des Bremssystems, insbesondere der elektromechanischen Bremsvorrichtung eine Fehlfunktion vorliegt.

Die Erfindung umfasst zudem ein Verfahren zum Betreiben des Bremssystem. Bei diesem Verfahren wird nach dem Parken des Fahrzeugs der elektrische Aktuator der hydraulischen Fahrzeugbremse zum Erhöhen des Hydraulikdrucks betätigt. Nach dem Erreichen eines definierten Hydraulikdrucks wird die aktuelle Position des elektrischen Aktuators von dem Verriegelungsmechanismus blockiert. Die Betätigung des Aktuators und die Blockierung des Aktuators werden vorzugsweise im Falle einer Fehlfunktion einer Komponente der elektromechanischen Bremsvorrichtung durchgeführt. Alternativ ist auch es möglich, auch bei ordnungsgemäßer Funktionstüchtigkeit der elektromechanischen Bremsvorrichtung den elektrischen Aktuator der hydraulischen Fahrzeugbremse zu betätigen und die Position des Aktuators mithilfe des Verriegelungsmechanismus zu arretieren.

Eine Fehlfunktion in der elektromechanischen Bremsvorrichtung kann beispielsweise über die Höhe der aktuell erreichbaren Parkbremskraft festgestellt werden. Falls eine gewünschte Parkbremskraft von der elektromechanischen Bremsvorrichtung nicht bereitgestellt werden kann, was beispielsweise anhand des Motorstroms des elektrischen Bremsmotors festgestellt werden kann, werden der elektrische Aktuator betätigt und der Verriegelungsmechanismus ausgelöst.

Gemäß noch einer weiteren zweckmäßigen Ausführung wird mit dem Beenden des Parkens die Blockierung des elektrischen Aktuators durch den Verriegelungsmechanismus aufgehoben. Hierzu wird das Verriegelungsglied, insbesondere die Sperrklinke des Verriegelungsmechanismus, aus der Sperrposition in die Freigabeposition verstellt.

Die verschiedenen Verfahrensschritte laufen in einem Regel- bzw. Steuergerät ab, das Bestandteil des Bremssystems ist. Hierbei handelt es sich beispielsweise um ein ESP-Steuergerät (elektronisches Stabilitätsprogramm), in welchem gegebenenfalls auch die Ansteuerung des Verriegelungsmechanismus durchgeführt wird. Zusätzlich oder alternativ kann es sich auch um ein Steuergerät des Bremskraftverstärkers handeln, der den elektrisch steuerbaren Aktuator umfasst, oder um ein sonstiges Steuergerät. Es ist möglich und gegebenenfalls zweckmäßig, den Verriegelungsmechanismus über das Steuergerät des Bremskraftverstärkers oder über ein sonstiges Steuergerät, z.B. eines Airbags oder im Lenksystem des Fahrzeugs anzusteuern. Insbesondere für den Fall, dass das für die elektromechanische Bremsvorrichtung zuständige Steuergerät funktionsuntüchtig wird, kann der Verriegelungsmechanismus über ein anderes, intaktes Steuergerät angesteuert werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer hydraulischen Fahrzeugbremse mit einem Bremskraftverstärker, wobei die Radbremseinrichtungen der Fahrzeugbremse an der Fahrzeughinterachse zusätzlich mit einer elektromechanischen Bremsvorrichtung mit einem elektrischen Bremsmotor ausgestattet sind,
- Fig. 2: einen Schnitt durch eine elektromechanische Bremsvorrichtung mit einem elektrischen Bremsmotor,
- Fig. 3: einen Schnitt durch einen Bremskraftverstärker mit elektromotorischer Verstärkung und einem Verriegelungsmechanismus, der auf ein Getriebezahnrad wirkt,
- Fig. 4: einen Schnitt durch einen Fig. 3 entsprechenden Bremskraftverstärker, dessen Verriegelungsmechanismus ein auf der Motorwelle des Elektromotors aufsitzendes Zahnrad wirkt,
- Fig. 5: das Zahnrad in einer Ausführung mit einem Sägezahnprofil,
- Fig. 6: das Zahnrad in einer Ausführung mit Zähnen mit einem symmetrischen Dreiecksprofil,
- Fig. 7: ein Ablaufschema zum manuellen Verriegeln und Entriegeln des Verriegelungsmechanismus,
- Fig. 8: ein Ablaufschema zum selbsttätigen Verriegeln und Entriegeln des Verriegelungsmechanismus.

In den Figuren sind gleiche Bauteile mit gleichen Bezugszeichen versehen.

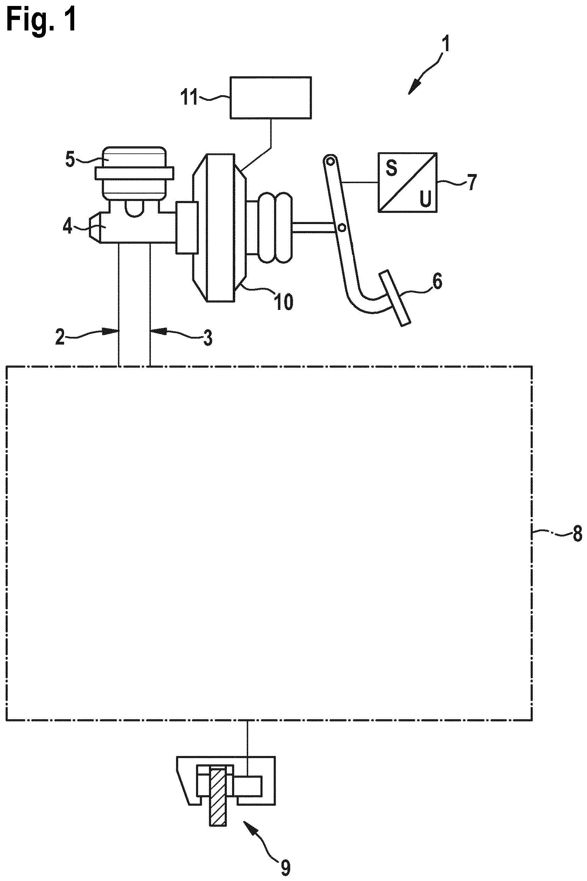

Die in Fig. 1 dargestellte hydraulische Fahrzeugbremse 1 für ein Fahrzeug umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die Bremskreise können auch als zwei Diagonalbremskreise mit jeweils einem Vorderrad und einem diagonal dazu angeordneten Hinterrad ausgebildet sein.

Die beiden Bremskreise 2, 3 sind an einen gemeinsamen Hauptbremszylinder 4 angeschlossen, der als Tandemzylinder ausgeführt ist und über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher über ein Getriebe den Hauptbremszylinder 4 betätigt (iBooster ^{(R)}) Der Bremskraftverstärker 10 stellt eine aktive Bremskomponente zur Beeinflussung des hydraulischen Bremsdrucks dar.

Die vom Pedalwegsensor 7 gemessene Stellbewegung des Bremspedals 6 wird als Sensorsignal an ein Steuergerät 11 des Bremssystems übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind. Zur Bremshydraulik 8 gehört des Weiteren eine Hydraulikpumpe, die Bestandteil eines elektronischen Stabilitätsprogramms (ESP) ist. Auch die Hydraulikpumpe ist eine aktive Bremskomponente zur Beeinflussung des hydraulischen Bremsdrucks.

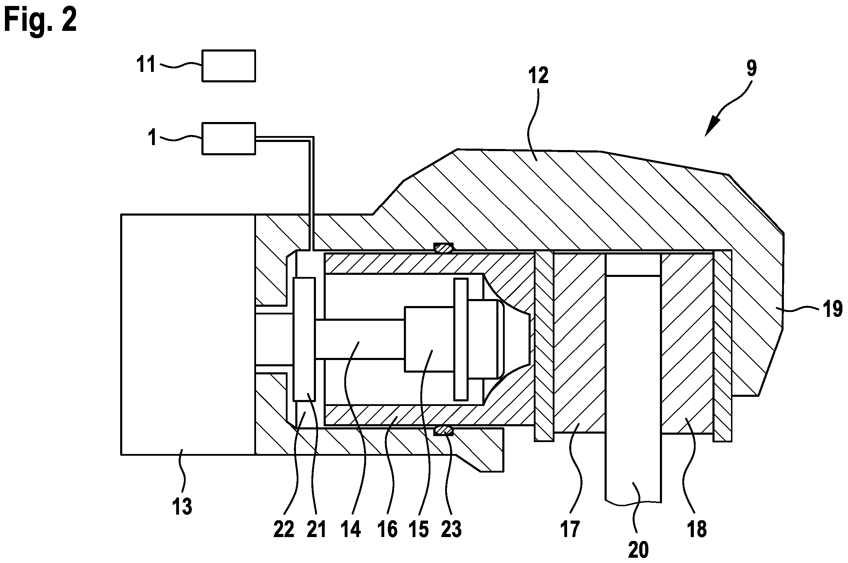

In Fig. 2 ist eine Radbremseinrichtung 9, die an Rädern an der Hinterachse des Fahrzeugs angeordnet ist, im Detail dargestellt. Die Radbremseinrichtung 9 ist Teil der hydraulischen Fahrzeugbremse 1 und wird aus dem Hinterachs-Bremskreis mit Bremsfluid 22 versorgt. Die Radbremseinrichtung 9 weist außerdem eine elektromechanische Bremsvorrichtung auf, die bevorzugt als Feststellbzw. Parkbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann. Derartige Radbremseinrichtungen 9 können gegebenenfalls auch an den Rädern der Vorderachse des Fahrzeugs angeordnet sein.

Die elektromechanische Bremsvorrichtung umfasst einen Bremssattel 12 mit einer Zange 19, welche eine Bremsscheibe 20 übergreift. Als Stellglied weist die Bremsvorrichtung eine Motor-Getriebe-Einheit mit einem Gleichstrom-Elektromotor als Bremsmotor 13 auf, dessen Rotorwelle eine Spindel 14 rotierend antreibt, auf der eine Spindelmutter 15 rotationsfest gelagert ist. Bei einer Rotation der Spindel 14 wird die Spindelmutter 15 axial verstellt. Die Spindelmutter 15 bewegt sich innerhalb eines Bremskolbens 16, der Träger eines Bremsbelags 17 ist, welcher von dem Bremskolben 16 gegen die Bremsscheibe 20 gedrückt wird. Auf der gegenüberliegenden Seite der Bremsscheibe 20 befindet sich ein weiterer Bremsbelag 18, der ortsfest an der Zange 19 gehalten ist. Der Bremskolben 16 ist auf seiner Außenseite über einen umgreifenden Dichtring 23 druckdicht gegenüber dem aufnehmenden Gehäuse abgedichtet.

Innerhalb des Bremskolbens 16 kann sich die Spindelmutter 15 bei einer Drehbewegung der Spindel 14 axial nach vorne in Richtung auf die Bremsscheibe 20 zu bzw. bei einer entgegen gesetzten Drehbewegung der Spindel 14 axial nach hinten bis zum Erreichen eines Endanschlags 21 bewegen. Zum Erzeugen einer Klemmkraft beaufschlagt die Spindelmutter 15 die innere Stirnseite des Bremskolbens 16, wodurch der axial verschieblich in der Bremsvorrichtung gelagerte Bremskolben 16 mit dem Bremsbelag 17 gegen die zugewandte Stirnfläche der Bremsscheibe 20 gedrückt wird. Die Spindelmutter 15 stellt ein Übertragungsglied zwischen dem Bremsmotor und dem Bremskolben dar.

Für die hydraulische Bremskraft wirkt auf den Bremskolben 16 der hydraulische Druck des Bremsfluids 22 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Steuergerät 11 erzeugt.

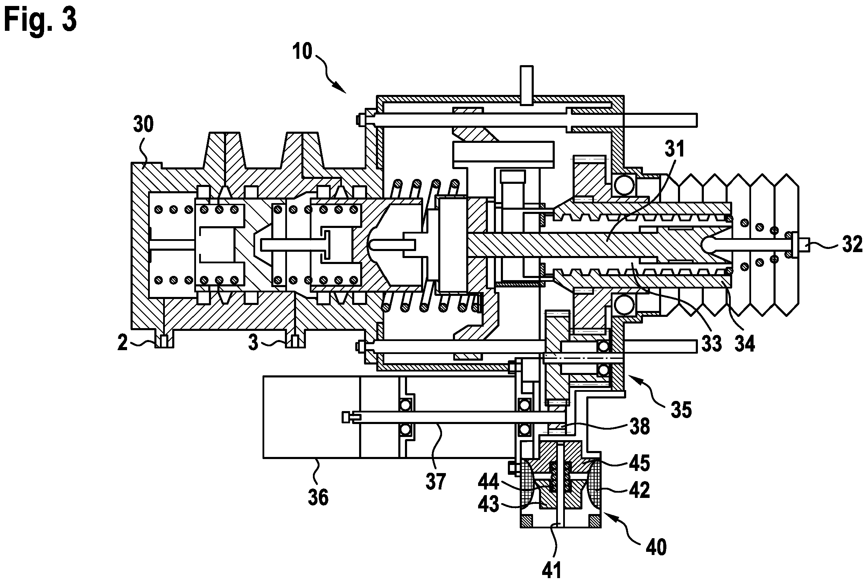

In Fig. 3 ist der Bremskraftverstärker 10 in seiner Ausführung als iBooster im Schnitt dargestellt. Der Bremskraftverstärker 10 umfasst einen als Tandemzylinder ausgebildeten Hauptbremszylinder 30 zur Versorgung der Bremskreise 2 und 3 mit einem Hydraulikdruck. Der Hauptbremszylinder 30 wird über eine Stellstange 31 betätigt, die mit einer Stange 32 verbunden ist, welche zum Bremspedal 6 (Fig. 1) gehört. Bei einer Betätigung des Bremspedals werden die Stellstange 31 axial verschoben und der Hauptbremszylinder 30 zur Erzeugung eines erhöhten Hydraulikdrucks betätigt.

Der Bremskraftverstärker 10 weist außerdem eine elektromechanische Verstärkung auf, die einen Elektromotor 36 und ein Getriebe 35 umfasst. Die Stellstange 31 ist in einer Spindel 33 aufgenommen, welche in einer Spindelmutter 34 gelagert ist, wobei Spindel 33 und Spindelmutter 34 über ein Gewinde gekoppelt sind. Die Spindelmutter 34 ist drehbar gelagert, jedoch axial gehäusefest angeordnet und wird von dem Getriebe 35 angetrieben. Bei einer Rotation des Elektromotors 36 wird die Drehbewegung der Motorwelle 37 über ein Getriebezahnrad 38, das drehfest auf der Motorwelle 37 aufsitzt, auf das Getriebe 35 übertragen, dessen Drehbewegung abtriebsseitig auf die Spindelmutter 34 übertragen wird. Die Drehbewegung der Spindelmutter 34 wird in eine axiale Stellbewegung der Spindel 33 übertragen, die auf den Hauptbremszylinder 30 wirkt.

Dem Bremskraftverstärker 10 ist außerdem ein Verriegelungsmechanismus 40 zugeordnet, der es erlaubt, den Elektromotor 36 und das Getriebe 35 in einer bestimmten Position zu arretieren bzw. zu verriegeln. Dies ermöglicht es, einen bestimmten Hydraulikdruck in der hydraulischen Fahrzeugbremse einzufrieren, insbesondere im Stillstand des Fahrzeugs, so dass dauerhaft über die hydraulische Fahrzeugbremse eine Parkbremskraft erzeugt wird.

Der Verriegelungsmechanismus 40 umfasst eine elektromagnetische Stelleinrichtung mit einer Sperrklinke 41, die translatorisch zwischen einer Freigabeposition und einer Sperrposition verstellbar ist. Die Verstellrichtung der Sperrklinke 41 liegt orthogonal zur Motorlängsachse des Elektromotors 36 sowie orthogonal zur Stellrichtung des Hauptbremszylinders 30. In Fig. 3 ist die Sperrklinke 41 in ihrer zurückgezogenen Freigabeposition verstellt, in welcher das Getriebezahnrad 38 unbeeinflusst von der Sperrklinke 41 ist. Bei einer Betätigung des Verriegelungsmechanismus 40 wird die Sperrklinke 41 in die Sperrposition verstellt, in der die Sperrklinke 41 arretierend in die Verzahnung des Getriebezahnrades 38 eingreift, so dass ein Zurückverstellen des Elektromotors 36 und damit auch der Spindel 33 zum Abbau des eingefrorenen Hydraulikdrucks ausgeschlossen ist.

Der Verriegelungsmechanismus 40 ist elektromagnetisch ausgebildet und weist eine bestrombare Ringspule 42 auf, bei deren Bestromung ein Anker 43, der auf der Sperrklinke 41 aufsitzt, axial in Richtung der Sperrposition verstellt wird. Der Anker 43 einschließlich der Sperrklinke 41 sind von einem Federelement 44 in die Freigabeposition kraftbeaufschlagt. Bei Bestromung der Ringspule 42 wird der Anker 43 gegen die Kraft des Federelementes 44 von der Freigabeposition in die Sperrposition verstellt.

Der Verriegelungsmechanismus 40 umfasst des Weiteren einen Permanentmagneten 45, der auf der dem Getriebezahnrad 38 zugewandten Seite im Verriegelungsmechanismus 40 angeordnet ist. Mit dem Erreichen der Sperrposition liegt der Anker 43 am Permanentmagneten 45 an und wird von diesem angezogen. Die Magnetkraft des Permanentmagneten 45 ist groß genug, dass auch nach dem Abschalten der Bestromung der Ringspule 42 der Anker 43 trotz der Federkraft 44 in der Sperrposition gehalten wird.

Zum Lösen der Sperrposition wird die Ringspule 42 entgegengerichtet bestromt, wodurch der Anker 43 von dem erzeugten Magnetfeld von der Sperrposition in die Freigabeposition verstellt wird.

Die Ansteuerung des Verriegelungsmechanismus 40 erfolgt über ein Steuergerät des Bremskraftverstärkers.

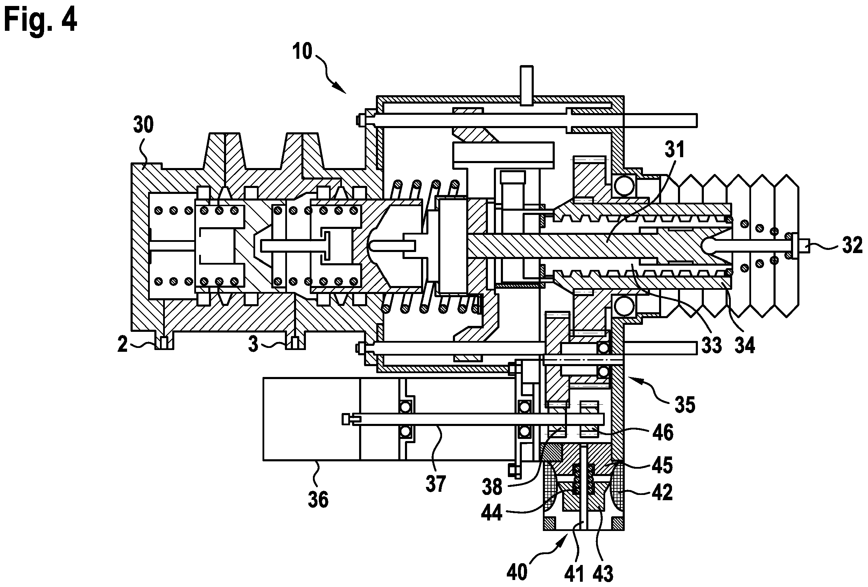

Der in Fig. 4 dargestellte Bremskraftverstärker 10 weist den grundsätzlich gleichen Aufbau wie derjenige nach Fig. 3 auf. Unterschiedlich ist jedoch die konstruktive Ausführung der Blockierung des Elektromotors 36 bzw. des Getriebes 35 mithilfe des Verriegelungsmechanismus 40. Auf der Motorwelle 37 sitzt zum einen das Getriebezahnrad 38 auf, über das die Antriebsbewegung der Motorwelle 37 auf das Getriebe 35 übertragen wird. Zum andern sitzt, mit größerem axialem Abstand, auf der Motorwelle 37 ein zusätzliches Zahnrad 46 auf, das drehfest mit der Motorwelle 37 verbunden ist und sich benachbart zur freien Stirnseite der Motorwelle 37 befindet. Das zusätzliche Zahnrad 46 dient zum Blockieren und wirkt mit der Sperrklinke 41 des Verriegelungsmechanismus 40 zusammen. In der Sperrposition greift die Sperrklinke 41 in die Verzahnung des Zahnrades 46 ein und blockiert hierdurch die Drehbewegung des Elektromotors 36.

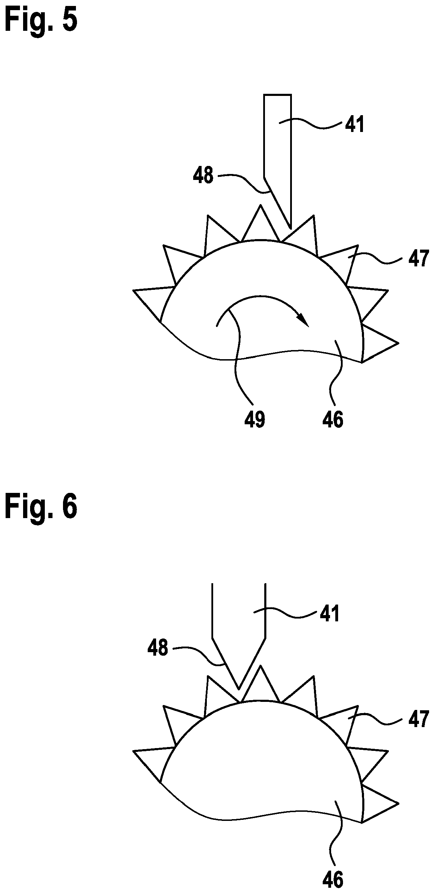

Die Blockierung der Drehbewegung des Elektromotors 36 kann in beide Drehrichtungen des Elektromotors erfolgen. In Fig. 5 ist eine Ausführungsvariante eines auf der Motorwelle aufsitzenden Zahnrades 46 mit einer Verzahnung 47 dargestellt. Die Sperrklinke 41 weist an ihrer Spitze ein abgeschrägtes Profil 48 auf. Dies ermöglicht ein Durchrutschen des Zahnrades 46 in Drehrichtung 49, bei der es sich um die Zuspannrichtung und das Erzeugen eines höheren Hydraulikdrucks handelt. Somit ist es möglich, den Hydraulikdruck auch mit der Sperrklinke 41 in der Sperrposition zu erhöhen. In der entgegengesetzten Drehrichtung ist dagegen die Drehbewegung des Zahnrades 46 blockiert, so dass der Hydraulikdruck dauerhaft eingefroren ist.

In der Ausführungsvariante gemäß Fig. 6 ist das Zahnprofil 47 des Zahnrades 46 als symmetrisches Dreiecksprofil ausgebildet. Auch die Spitze der Sperrklinke 41 weist ein symmetrisches Dreiecksprofil 48 auf. Diese Ausführung ermöglicht es, auch mit der Sperrklinke 41 in der Sperrposition bei Betätigung des Elektromotors 36 das Zahnrad 46 in beide Richtungen zu verdrehen. Das vom Elektromotor 36 erzeugte Motormoment ist hoch genug, dass das Zahnrad 46 in beide Drehrichtungen unter der einragenden Sperrklinke 41 hindurchrutschen kann. Somit ist es möglich, trotz der einragenden Sperrklinke sowohl den Hydraulikdruck zu erhöhen als auch den Hydraulikdruck herabzusetzen.

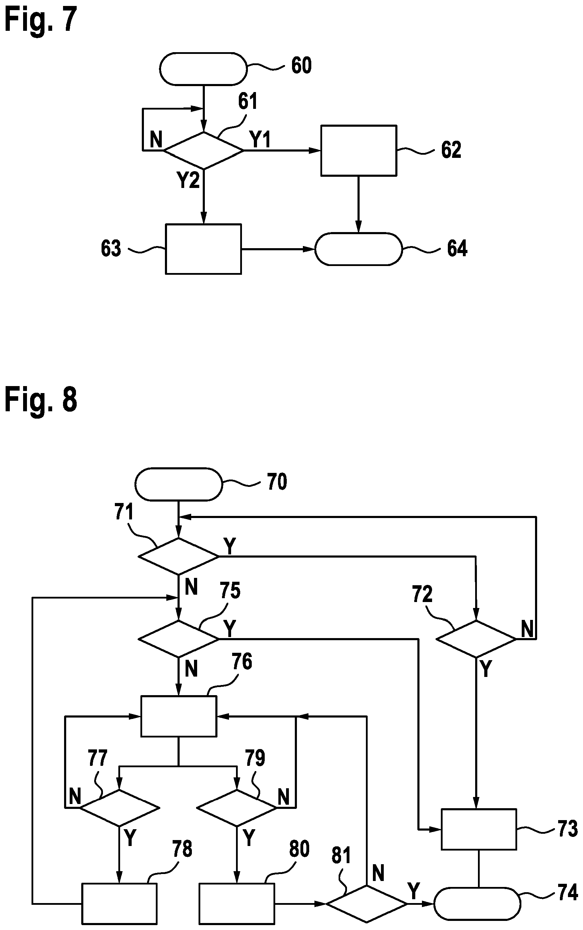

In Fig. 7 ist ein Ablaufschema zum manuellen Verriegeln und Entriegeln des Verriegelungsmechanismus und entsprechend zum Überführen der Sperrklinke zwischen Freigabe- und Sperrposition dargestellt. Nach dem Start des Verfahrens im ersten Schritt 60 erfolgt im nächsten Schritt 61 die Abfrage, ob ein Betätigungsschalter zur manuellen Betätigung des Verriegelungsmechanismus betätigt ist oder nicht. Befindet sich der Betätigungsschalter im nicht-betätigten Zustand, wird der Nein-Verzweigung ("N") folgend wieder zum Beginn der Abfrage gemäß Schritt 61 zurückgekehrt und diese in regelmäßigen Abständen erneut durchlaufen. Ergibt dagegen die Abfrage im Schritt 61, dass der Betätigungsschalter in der Weise betätigt worden ist, dass eine dauerhafte Parkbremskraft erzeugt werden soll, wird der Y1-Verzweigung folgend zum nächsten Schritt 62 vorgerückt und der Verriegelungsmechanismus ausgelöst, so dass die Sperrklinke von der Freigabe- in die Sperrposition verstellt wird und den Elektromotor blockiert. Anschließend ist das Verfahren im Schritt 64 beendet.

Ergibt dagegen die Abfrage im Schritt 61, dass ausgehend von einem bereits geparkten Zustand durch eine entsprechende Betätigung des Betätigungsschalters der Verriegelungsmechanismus gelöst werden soll, wird der Y2-Verzweigung folgend zum nächsten Schritt 63 vorgerückt und der Verriegelungsmechanismus gelöst. Entsprechend wird die Sperrklinke von der Sperrposition in die Freigabeposition überführt, anschließend ist das Verfahren im Schritt 64 beendet.

In Fig. 8 ist ein Ablaufschema mit Verfahrensschritten zum selbsttätigen Verriegeln und Entriegeln des Verriegelungsmechanismus dargestellt, dessen Ansteuerung von einem Parkbremsschalter abhängt. Der Parkbremsschalter wird vom Fahrer zum Aktivieren bzw. Deaktivieren der elektromechanischen Bremsvorrichtung betätigt.

Nach dem Start des Verfahrens im Schritt 70 folgt im nächsten Schritt 71 die Abfrage, ob das ESP-Steuergerät verfügbar ist. Ist dies der Fall, wird der Ja-Verzweigung ("Y") folgend zum nächsten Schritt 72 vorgerückt und dort abgefragt, ob die Zündung im Fahrzeug ausgestellt ist. Ist dies nicht der Fall, erfolgt gemäß der Nein-Verzweigung eine Rückkehr zum Schritt 71 und wird in regelmäßigen Abständen erneut die Abfrage durchgeführt, ob das ESP-Steuergerät verfügbar ist. Ergibt die Abfrage im Schritt 72 dagegen, dass die Zündung ausgestellt ist, wird der Ja-Verzweigung folgend zum nächsten Schritt 73 vorgerückt und der Verriegelungsmechanismus 40 über eine Ansteuerung des ESP-Steuergeräts in die Verriegelungsposition verstellt, so dass die Sperrklinke von der Freigabe- in die Sperrposition überführt wird. Damit ist der Hydraulikdruck in der hydraulischen Fahrzeugbremse eingefroren und das Verfahren wird im nächsten Schritt 74 beendet.

Ergibt dagegen die Abfrage im Schritt 71, dass das ESP-Steuergerät nicht verfügbar ist, wird der Nein-Verzweigung folgend zum nächsten Schritt 75 vorgerückt und hier abgefragt, ob die Zündung ausgestellt ist. Ist dies der Fall, wird der Ja-Verzweigung folgend zum Schritt 73 vorgerückt und in vorbeschriebener Weise der Verriegelungsmechanismus ausgelöst. Andernfalls wird der Nein-Verzweigung folgend zum nächsten Schritt 76 vorgerückt, in welchem der Zustand des Parkbremsschalters eingelesen wird.

Im Schritt 77 wird abgefragt, ob der Parkbremsschalter zum Entriegeln des Verriegelungsmechanismus und zum Überführen der Sperrklinke in die Freigabeposition betätigt ist. Ist dies nicht der Fall, wird der Nein-Verzweigung folgend wieder zum Schritt 76 zurückgekehrt und dort erneut in zyklischen Abständen der aktuelle Zustand des Parkbremsschalters eingelesen. Ergibt dagegen die Abfrage im Schritt 77, dass der Parkbremsschalter zum Entriegeln des Verriegelungsmechanismus betätigt ist, wird der Ja-Verzweigung folgend zum Schritt 78 vorgerückt und die Entriegelung des Verriegelungsmechanismus durchgeführt Anschließend wird zum Schritt 75 zurückgekehrt und regelmäßig abgefragt, ob die Zündung des Motors ausgestellt ist.

Im Schritt 79, der ebenfalls auf das Einlesen des Zustandes des Parkbremsschalters im Schritt 76 erfolgt, erfolgt die Abfrage, ob der Parkbremsschalter in Richtung des Verriegelns des Verriegelungsmechanismus betätigt ist. Ist dies nicht der Fall, wird der Nein-Verzweigung folgend wieder zum Schritt 76 zurückgekehrt und in zyklischen Abständen der Zustand des Parkbremsschalters eingelesen. Ergibt dagegen die Abfrage im Schritt 79, dass der Verriegelungsmechanismus in Richtung der Verriegelung betätigt werden soll, wird der Ja-Verzweigung folgend zum Schritt 80 vorgerückt und dort der Verriegelungsmechanismus ausgelöst, so dass die Sperrklinke von der Freigabe der Sperrposition verstellt wird. Anschließend wird zum Schritt 81 vorgerückt und abgefragt, ob die Zündung ausgestellt ist. Ist dies nicht der Fall, wird wieder zum Schritt 76 zurückgekehrt und in zyklischen Abständen der Zustand des Parkbremsschalters eingelesen. Ergibt dagegen die Abfrage im Schritt 81, dass die Zündung ausgestellt ist, wird zum Schritt 74 vorgerückt, das Verfahren ist beendet.

## Patentansprüche

1. Bremssystem für ein Fahrzeug mit einer hydraulischen Fahrzeugbremse (1) mit einem elektrischen Aktuator (10) zur Beeinflussung des Hydraulikdrucks und mit einer elektromechanischen Bremsvorrichtung mit mindestens einem elektrischen Bremsmotor (13), **dadurch gekennzeichnet, dass** dem elektrischen Aktuator (10) der hydraulischen Fahrzeugbremse (1) oder einer vom Aktuator (10) betätigbaren Übertragungseinrichtung ein Verriegelungsmechanismus (40) zum Verriegeln in einer Hydraulikdruck erzeugenden Parkposition zugeordnet ist.

2. Bremssystem nach Anspruch 1, **dadurch gekennzeichnet, dass** der elektrische Aktuator (10) der hydraulischen Fahrzeugbremse (1) einen Elektromotor (36) umfasst, der ein die Übertragungseinrichtung bildendes Getriebe (35) antreibt, wobei über den Verriegelungsmechanismus (40) der Elektromotor (36) oder das Getriebe (35) verriegelbar ist.

3. Bremssystem nach Anspruch 1 oder 2, **dadurch gekennzeichnet, dass** der Verriegelungsmechanismus (40) eine elektromagnetische Stelleinrichtung mit einer Sperrklinke (41) umfasst, die zwischen einer Freigabe- und einer Sperrposition verstellbar ist.

4. Bremssystem nach Anspruch 3, **dadurch gekennzeichnet, dass** in der elektromagnetischen Stelleinrichtung ein Permanentmagnet (45) angeordnet ist, der die Sperrklinke (41) in Richtung der Sperrposition beaufschlagt.

5. Bremssystem nach Anspruch 2 und 3 oder 4, **dadurch gekennzeichnet, dass** die Sperrklinke (41) des Verriegelungsmechanismus (40) in der Sperrposition ein Getriebezahnrad (38) des Getriebes (35) blockiert.

6. Bremssystem nach Anspruch 2 und 3 oder 4, **dadurch gekennzeichnet, dass** die Sperrklinke (41) des Verriegelungsmechanismus (40) in der Sperrposition ein Zahnrad (46) blockiert, das mit der Motorwelle (37) des Elektromotors (36) drehfest verbunden ist.

7. Bremssystem nach Anspruch 6, **dadurch gekennzeichnet, dass** das mit der Motorwelle (37) verbundene Zahnrad ein Sägezahnprofil aufweist, derart, dass ein Weiterdrehen des Zahnrads nur in Richtung eines höheren Hydraulikdrucks möglich ist.

8. Bremssystem nach Anspruch 6, **dadurch gekennzeichnet, dass** das mit der Motorwelle (37) verbundene Zahnrad (46) Zähne mit einem symmetrischen Dreiecksprofil aufweist.

9. Bremssystem nach einem der Ansprüche 1 bis 8, **dadurch gekennzeichnet, dass** der elektrische Aktuator (10) zur Beeinflussung des Hydraulikdrucks Teil eines vom Bremspedal (6) zu beaufschlagenden Bremskraftverstärkers (10) ist.

10. Bremssystem nach einem der Ansprüche 1 bis 9, **dadurch gekennzeichnet, dass** ein Betätigungsschalter zum manuellen Betätigen des Verriegelungsmechanismus (40) vorgesehen ist.

11. Regel- bzw. Steuergerät (11) zur Ansteuerung des Verriegelungsmechanismus (40) des Bremssystems nach einem der Ansprüche 1 bis 10.

12. Kombination von mindestens zwei Steuergeräten zur Ansteuerung eines Teils oder sämtlicher einstellbaren Komponenten des Bremssystems nach einem der Ansprüche 1 bis 10, wobei ein erstes Steuergerät die elektromechanische Bremsvorrichtung und ein zweites Steuergerät den elektrischen Aktuator (10) der hydraulischen Fahrzeugbremse (1) und den Verriegelungsmechanismus (40) ansteuert.

13. Verfahren zum Betreiben eines Bremssystems nach einem der Ansprüche 1 bis 10, bei dem nach dem Parken des Fahrzeugs der elektrische Aktuator (10) der hydraulischen Fahrzeugbremse (1) zum Erhöhen des Hydraulikdrucks betätigt und nach dem Erreichen eines definierten Hydraulikdrucks die aktuelle Position des elektrischen Aktuators (10) von dem Verriegelungsmechanismus (40) blockiert wird.

14. Verfahren nach Anspruch 13, **dadurch gekennzeichnet, dass** der elektrische Aktuator (10) der hydraulischen Fahrzeugbremse (1) betätigt und der Verriegelungsmechanismus (40) nur ausgelöst werden, falls die gewünschte Parkbremskraft über die elektromechanische Bremsvorrichtung nicht bereitgestellt werden kann.

15. Verfahren nach Anspruch 13 oder 14, **dadurch gekennzeichnet, dass** mit dem Beenden des Parkens die Blockierung des elektrischen Aktuators (10) der hydraulischen Fahrzeugbremse (1) durch Verstellen des Verriegelungsmechanismus (40) in die Freigabeposition aufgehoben wird.

## Claims

1. Braking system for a vehicle with a hydraulic vehicle brake (1) with an electric actuator (10) for influencing the hydraulic pressure, and with an electromechanical brake apparatus with at least one electric brake motor (13), **characterized in that** a latching mechanism (40) for latching in a parking position generating hydraulic pressure has been assigned to the electric actuator (10) of the hydraulic vehicle brake (1) or to a transmission device capable of being actuated by the actuator (10).

2. Braking system according to Claim 1, **characterized in that** the electric actuator (10) of the hydraulic vehicle brake (1) includes an electric motor (36) which drives a drive mechanism (35) constituting the transmission device, said electric motor (36) or said drive mechanism (35) being capable of being latched via the latching mechanism (40).

3. Braking system according to Claim 1 or 2, **characterized in that** the latching mechanism (40) includes an electromagnetic positioning device with a locking pawl (41) which is relocatable between a release position and a locking position.

4. Braking system according to Claim 3, **characterized in that** a permanent magnet (45) which acts on the locking pawl (41) in the direction of the locking position is arranged in the electromagnetic positioning device.

5. Braking system according to Claims 2 and 3 or 4, **characterized in that** the locking pawl (41) of the latching mechanism (40) in the locking position blocks a toothed gear (38) of the drive mechanism (35).

6. Braking system according to Claims 2 and 3 or 4, **characterized in that** the locking pawl (41) of the latching mechanism (40) in the locking position blocks a toothed gear (46) which is connected in torsion-resistant manner to the shaft (37) of the electric motor (36).

7. Braking system according to Claim 6, **characterized in that** the toothed gear connected to the motor shaft (37) has a sawtooth profile in such a manner that a further rotation of the toothed gear is possible only in the direction of a higher hydraulic pressure.

8. Braking system according to Claim 6, **characterized in that** the toothed gear (46) connected to the motor shaft (37) exhibits teeth having a symmetrical triangular profile.

9. Braking system according to one of Claims 1 to 8, **characterized in that** the electric actuator (10) for influencing the hydraulic pressure is part of a brake-force booster (10) to be acted upon by the brake pedal (6) .

10. Braking system according to one of Claims 1 to 9, **characterized in that** an actuating switch for manual actuating of the latching mechanism (40) is provided.

11. Regulating unit or control unit (11) for actuating of the latching mechanism (40) of the braking system according to one of Claims 1 to 10.

12. Combination of at least two control units for triggering some or all of the adjustable components of the braking system according to one of Claims 1 to 10, wherein a first control unit triggers the electromechanical brake apparatus, and a second control unit triggers the electric actuator (10) of the hydraulic vehicle brake (1) and the latching mechanism (40).

13. Method for operating a braking system according to one of Claims 1 to 10, wherein after the vehicle has been parked the electric actuator (10) of the hydraulic vehicle brake (1) is actuated for the purpose of increasing the hydraulic pressure, and after a defined hydraulic pressure has been attained the current position of the electric actuator (10) is blocked by the latching mechanism (40).

14. Method according to Claim 13, **characterized in that** the electric actuator (10) of the hydraulic vehicle brake (1) is actuated and the latching mechanism (40) is triggered only if the desired parking-brake force cannot be provided via the electromechanical brake apparatus.

15. Method according to Claim 13 or 14, **characterized in that** with the termination of the parking the blocking of the electric actuator (10) of the hydraulic vehicle brake (1) is cancelled by relocating the latching mechanism (40) into the release position.

## Revendications

1. Système de freinage destiné à un véhicule comprenant un frein hydraulique de véhicule (1) doté d'un actionneur électrique (10) pour influencer la pression hydraulique, et un dispositif de freinage électromécanique doté d'au moins un moteur de freinage électrique (13), **caractérisé en ce que** l'actionneur électrique (10) du frein hydraulique de véhicule (1) ou un dispositif de transmission pouvant être actionné par l'actionneur (10) est associé à un mécanisme de verrouillage (40) pour un verrouillage dans une position de stationnement produisant une pression hydraulique.

2. Système de freinage selon la revendication 1, **caractérisé en ce que** l'actionneur électrique (10) du frein hydraulique de véhicule (1) comprend un moteur électrique (36) qui entraîne une transmission (35) constituant le dispositif de transmission, le mécanisme de verrouillage (40) permettant de verrouiller le moteur électrique (36) ou la transmission (35).

3. Système de freinage selon la revendication 1 ou 2, **caractérisé en ce que** le mécanisme de verrouillage (40) comprend un dispositif de réglage doté d'un cliquet d'arrêt (41) qui peut être déplacé entre une position de déblocage et une position de blocage.

4. Système de freinage selon la revendication 3, **caractérisé en ce que** dans le dispositif de réglage électromagnétique est disposé un aimant permanent (45) qui sollicite le cliquet d'arrêt (41) en direction de la position de blocage.

5. Système de freinage selon les revendications 2 et 3 ou 4, **caractérisé en ce que** le cliquet d'arrêt (41) du mécanisme de verrouillage (40), dans la position de blocage, bloque une roue dentée de transmission (38) de la transmission (35).

6. Système de freinage selon les revendications 2 et 3 ou 4, **caractérisé en ce que** le cliquet d'arrêt (41) du mécanisme de verrouillage (40), dans la position de blocage, bloque une roue dentée (46) qui est reliée de manière verrouillée en rotation à l'arbre moteur (37) du moteur électrique (36).

7. Système de freinage selon la revendication 6, **caractérisé en ce que** la roue dentée reliée à l'arbre moteur (37) présente un profil en dents de scie de sorte qu'une rotation supplémentaire de la roue dentée n'est possible que dans la direction d'une pression hydraulique accrue.

8. Système de freinage selon la revendication 6, **caractérisé en ce que** la roue dentée (46) reliée à l'arbre moteur (37) présente des dents ayant un profil triangulaire symétrique.

9. Système de freinage selon l'une quelconque des revendications 1 à 8, **caractérisé en ce que** l'actionneur électrique (10) fait partie d'un servofrein (10) à solliciter par la pédale de frein (6) pour influencer la pression hydraulique.

10. Système de freinage selon l'une quelconque des revendications 1 à 9, **caractérisé en ce qu'**un commutateur d'actionnement pour l'actionnement manuel du mécanisme de verrouillage (40) est prévu.

11. Appareil de régulation ou de commande (11) pour piloter le mécanisme de verrouillage (40) du système de freinage selon l'une quelconque des revendications 1 à 10.

12. Combinaison d'au moins deux appareils de commande pour piloter une partie ou l'ensemble des composants réglables du système de freinage selon l'une quelconque des revendications 1 à 10, dans lequel un premier appareil de commande pilote le dispositif de freinage électromécanique et un deuxième appareil de commande pilote l'actionneur électrique (10) du frein hydraulique de véhicule (1) et le mécanisme de verrouillage (40).

13. Procédé d'exploitation d'un système de freinage selon l'une quelconque des revendications 1 à 10, dans lequel, après la mise en stationnement du véhicule, l'actionneur électrique (10) du frein hydraulique de véhicule (1) est actionné pour augmenter la pression hydraulique, et après avoir atteint une pression hydraulique définie, la position actuelle de l'actionneur électrique (10) du mécanisme de verrouillage (40) est bloquée.

14. Procédé selon la revendication 13, **caractérisé en ce que** l'actionneur électrique (10) du frein hydraulique de véhicule (1) est actionné et le mécanisme de verrouillage (40) n'est déclenché que si la force de freinage de stationnement souhaitée ne peut pas être fournie par l'intermédiaire du dispositif de freinage électromécanique.

15. Procédé selon la revendication 13 ou 14, **caractérisé en ce qu'**à la fin du stationnement, le blocage de l'actionneur électrique (10) du frein hydraulique de véhicule (1) est annulé par le déplacement du mécanisme de verrouillage (40) dans la position de déblocage.
